# EUROPEAN PATENT APPLICATION

(11) **EP 1 923 875 A2**
(43) Date of publication of application: **21.05.2008**
(21) Application number: 07109923.8
(22) Date of filing: 08.06.2007
(51) Int. Cl.: G11B 7/09, G11B 7/095

(54) **Optical pick-up actuator**

(30) Priority: 17.11.2006 KR 20060113900
(71) Applicant: SAMSUNG ELECTRONICS CO., LTD., Suwon-si, Gyeonggi-do 442-742 (KR)
(72) Inventor: Kim, Seok-jung, Suwon-si Gyeonggi-do (KR); Park, Se-june, Seoul (KR); Park, Soo-han, Suji-gu Yongin-si Gyeonggi-do (KR); Ahn, Young-man, Suwon-si Gyeonggi-do (KR)
(74) Representative: Davies, Robert Ean

(57) **Abstract**

An optical pick-up actuator capable of a tilt operation. The optical pick-up actuator has a triaxial magnetic driving portion installed on a movable portion (20) and a supporting portion to move the movable portion in a focusing direction and a tracking direction and tilt the movable portion. The triaxial magnetic driving portion includes a pair of focusing/tilting driving magnets (41, 42), a pair of tracking driving magnets (43, 44), focusing coils (51,52), a pair of tilt coils (53, 54), and a pair of tracking coils (55, 56). The pair of tilt coils (53, 54) installed on the movable portion each face one of the pair of focusing/tilting driving magnets (41, 42) and are wired independently from the pair of focusing coils (51, 52).

## Description

Aspects of the present invention relate to an optical pick-up actuator, and more particularly, but not exclusively, to an optical pick-up actuator with a relatively slim structure, capable of an independent tilt servo operation.

Conventional optical pick-up actuators that are tilted can be categorized into independently driven and differentially driven actuators. In the case of independently driven actuators, in order to form a tilt driving mechanism separately from focusing coils, a magnetic circuit with separate magnets, a tilt coil, and other components is provided to independently drive tilting of the actuator.

In the case of differentially driven actuators, current is applied to each of a pair of separated focusing coils in a tracking direction of an object lens. During a focusing operation, the difference in currents applied to each of the focusing coils allows tilting to be performed. This type of differentially driven actuators has the advantages of not requiring, or eliminating, a separate magnet or tilt coil. In addition, since a tilting operation using an existing pair of focusing coils is possible, the differentially driven actuators can be made slimmer. However, it is difficult to apply this method in servo operations because focusing and tilting operations are performed with one pair of focusing coils. When mutual coupling exists between focusing and tilting operations due to the structure of an optical pick-up actuator or due to limitations imposed by the assembly of the optical pick-up actuator the effects of this coupling when used in servo control, increases the difficulty in performing the focus and tilt servo operations.

Embodiments of the present invention aim to provide an optical pick-up actuator that is structurally simple and capable of an independent tilt servo operation.

Additional aspects and/or advantages of the invention will be set forth in part in the description which follows and, in part, will be obvious from the description, or may be learned by practice of the invention.

According to an aspect of the present invention, an optical pick-up actuator is provided having a movable portion on which an object lens is mounted; a supporting portion movably supporting the movable portion; and a triaxial magnetic driving portion installed on the movable portion and the supporting portion to move the movable portion in a focusing direction and a tracking direction and to tilt the movable portion. The triaxial magnetic driving portion includes first and second focusing/tilting driving magnets to move the movable portion in the focusing direction and installed on the supporting portion in a diagonally crossing, mutually facing disposition with respect to the object lens; first and second tracking driving magnets to move the movable portion in the tracking direction and installed on the supporting portion in a diagonally crossing, mutually facing disposition with respect to the object lens; first and second focusing coils to move the movable portion in the focusing direction and installed on the movable so that the first focusing coil faces the first focusing/tilting driving magnet and the second focusing coil faces the second focusing/tilting driving magnet; first and second tilt coils to tilt the movable portion, installed on the movable portion so that the first tilt coil faces the first focusing/tilting driving magnet and the second tilt coil faces the second focusing/tilting driving magnet, and wired independently from the first and second focusing coils; and first and second tracking coils to move the movable portion in the tracking direction and installed on the movable portion so that the first tracking coil faces the first tracking driving magnet and the second tracking coil faces the second tracking driving magnet.

Preferably, the first tilt coil is arranged inside the first focusing coil and the second tilt coil is arranged inside the second focusing coil.

Preferably, the first focusing coil is installed on one end of the movable portion and the second focusing coil is installed on another end of the movable portion so as to face the first focusing coil; the first tilt coil is installed on one end of the movable portion and the second tilt coil is installed on another end of the movable portion so as to face the first tilt coil; and the first tracking coil is installed on one end of the movable portion and the second tracking coil is installed on another end of the movable portion so as to face the first tracking coil.

Preferably, the first and second focusing/tilting driving magnets may be polarized vertically in a focusing direction.Preferably, the first and second tracking driving magnets may be polarized laterally in a tracking direction.

Preferably, the one of the first and second focusing/tilting driving magnets and the one of the first and second tracking driving magnets that are disposed at a side where light is incident are separated from one another by a distance equal to or greater than a diameter of the incident light so as to allow the light to be incident on the object lens.

In addition to the example embodiments and aspects as described above, further aspects and embodiments will be apparent by reference to the drawings and by study of the following descriptions.

For a better understanding of the invention, and to show how embodiments of the same may be carried into effect, reference will now be made, by way of example, to the accompanying diagrammatic drawings in which:
FIG. 1 is a schematic perspective view illustrating an optical pick-up actuator according to an example embodiment of the present invention;
FIG. 2 illustrates a disassembled perspective view of the optical pick-up actuator of FIG. 1;
FIG. 3 is a perspective view of separately illustrated triaxial magnetic driving portion of the optical pick-up actuator of FIG. 1;
FIG. 4 is a conceptual diagram for explaining the operating principle of the triaxial magnetic driving portion of the optical pick-up actuator of FIG. 1;
FIGS. 5A and 5B are conceptual diagrams explaining the principle of a focus servo operation;
FIGS. 6A and 6B are conceptual diagrams explaining the principle of a tilt servo operation;
FIGS. 7A and 7B are conceptual diagrams explaining the principle of a tracking servo operation; and
FIG. 8 is a schematic view of an optical recording/reading device employing the optical pick-up actuator of FIG. 1, according to an example embodiment of the present invention.

Reference will now be made in detail to embodiments of the present invention, examples of which are illustrated in the accompanying drawings, wherein like reference numerals refer to the like elements throughout. The embodiments are described below in order to explain the present invention by referring to the figures.

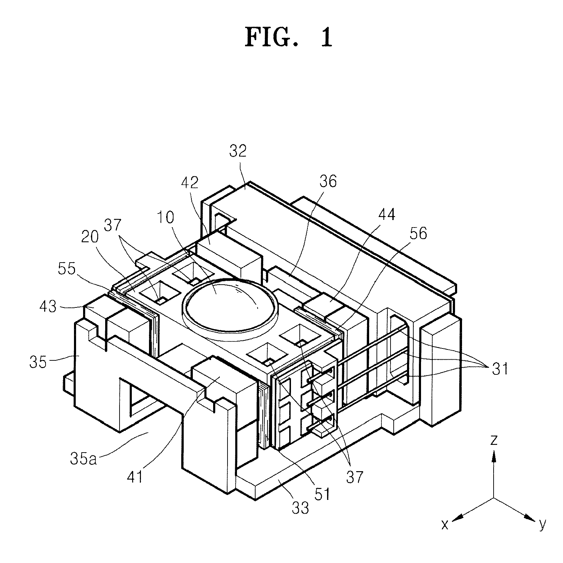

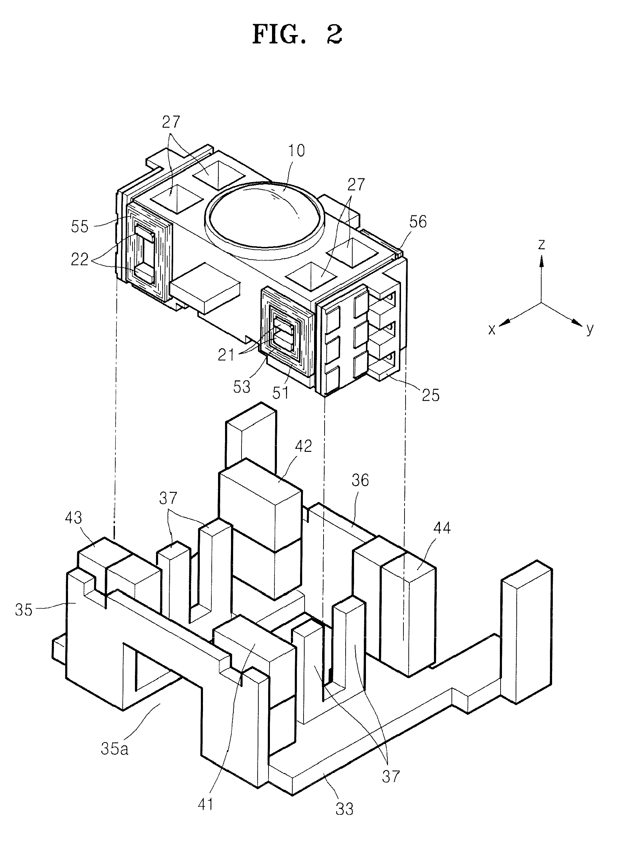

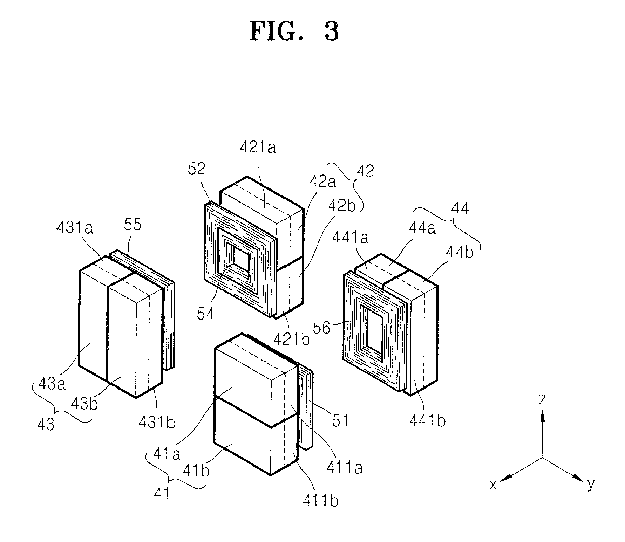

FIG. 1 is a schematic perspective view illustrating an optical pick-up actuator according to an example embodiment of the present invention. FIG. 2 illustrates a disassembled perspective view of the optical pick-up actuator of FIG. 1. FIG. 3 is a perspective view of a separately illustrated triaxial magnetic driving portion of the optical pick-up actuator of FIG. 1.

Referring to FIGS. 1 through 3, the optical pick-up actuator according to an example embodiment of the present invention includes a movable portion 20 on which an object lens 10 is mounted, a supporting portion movably supporting the movable portion 20, and a triaxial magnetic driving portion installed on the movable portion 20 and the supporting portion to perform servo operations of the movable portion 20. The supporting portion for the servo operation of the movable portion 20 includes a suspension 31 coupled to the movable portion 20 at one end and providing elastic support, a holder 32 to fix the other end of the suspension 31, and a base 33 to which the holder 32 is attached. The triaxial magnetic driving portion includes a first and a second focusing/tilting driving magnet 41 and 42, a first and a second tracking driving magnet 43 and 44, a first and a second focusing coil 51 and 52 (shown in FIG. 3), a first and a second tilt coil 53 and 54 (shown in FIGS. 2 and 3, respectively), and a first and a second tracking coil 55 and 56.

The first and second focusing/tilting driving magnets 41 and 42 are installed diagonally and symmetrically on the base 33 relative to the object lens 10, and are polarized vertically in a Z-direction. The first and second focusing/tilting driving magnets 41 and 42 interact electromagnetically with the first and second focusing coils 51 and 52, respectively, to generate a driving force in a ±Z-direction. The first and second focusing/tilting driving magnets electromagnetically interact with the first and second tilt coils 53 and 54 to generate a tilting force in an X-direction. To effectively generate the driving force, the direction of a magnetic force generated by the first and second focusing/tilting driving magnets 41 and 42 may be disposed so as to pass vertically through the first and second focusing coils 51 and 52 and the first and second tilt coils 53 and 54.

Turning to FIG. 3, the first and second focusing/tilting driving magnets 41 and 42 are formed by combining upper magnets 41 a and 42a respectively with lower magnets 41 b and 42b such that the first and second focusing/tilting driving magnets 41 and 42 are polarized in the X-direction on either side of a boundary indicated by the dotted lines. Diagonally facing poles 411a and 421a of the pair of upper magnets 41a and 42a may have the same or opposite polarity. Likewise, diagonally facing poles 411b and 421b of the pair of lower magnets 41b and 42b may have the same or opposite polarity. The directions of currents applied to first and second focusing coils 51 and 52 and the first and second tilt coils 53 and 54 may vary according to the positions of the pair of diagonally facing poles 411b and 421b.

The first and second tracking driving magnets 43 and 44 cross with the first and second focusing/tilting driving magnets 41 and 42, respectively. The first and second tracking driving magnets 43 and 44 are installed to face one another in diagonal directions on the base 33, and are polarized laterally in a Y-direction. The first and second tracking driving magnets 43 and 44 mutually interact electromagnetically with the first and second tracking coils 55 and 56, and generate a driving force in a ±Y-direction. The first and second tracking driving magnets 43 and 44 include left magnets 43a and 44a attached to right magnets 43b and 44b, respectively, on either side of the dotted lines as illustrated in FIG. 3. The right magnets 43b and 44a are polarized in an X-direction. Magnetizations 431a and 441a of the pair of left magnets 43a and 44a are diagonally opposite to each other such that the poles may be disposed in the same or opposite direction. Magnetizations 431b and 441b of the pair of right magnets 43b and 44b are diagonally disposed facing each other and may be disposed in the same or opposite direction. The directions of the currents applied to the first and second tracking coils 55 and 56 are applied differently.

Turning to FIG. 2, yokes are further included to effectively form the magnetic circuits of the first and second focusing/tilting driving magnets 41 and 42 and the first and second tracking driving magnets 43 and 44. The yokes include a first and a second outer yoke 35 and 36 and an inner yoke 37. The first and second outer yokes 35 and 36 are provided on the base 33 on the outside of the first and second focusing/tilting driving magnets 41 and 42 and the first and second tracking driving magnets 43 and 44. The inner yoke 37 is provided on the base 33 with the first and second focusing coils 51 and 52 and the first and second tilt coils 53 and 54 between the arms of the inner yoke 37 and arranged so as to face the first and second focusing/tilting driving magnets 41 and 42. Four through holes 27 are provided on the movable portion 20 to couple the movable portion 20 to the inner yoke 37.

In order to secure a passage to enable incident light to reach the object lens 10, the first focusing/tilting driving magnet 41 and the first tracking driving magnet 43 disposed in a direction of incident light are spaced apart by a diameter equal to or greater than a diameter of the incident light. The first outer yoke 35 disposed at the side of the first focusing/tilting driving magnet 41 and the first tracking driving magnet 43 has a light guide 35a to allow the incident light to reach the object lens 10.

The first and second tilt coils 53 and 54 are installed on the movable portion 20 on the first and second focusing/tilting driving magnets 41 and 42, respectively, together with the first and second focusing coils 51 and 52. The first and second tilt coils 53 and 54 may be respectively disposed inside the first and second focusing coils 51 and 52 to take into account the driving forces for the focus servo operation and the tilt servo operation. The first tilt coil 53 is wound around a spool 21 provided on the movable portion 20, and the first focusing coil 51 is wound around the outside of the wound first tilt coil 53. The second focusing coil 52 is wound around the outside of the wound second tilt coil 54. The first and second tilt coils 53 and 54 are wound independently from the first and second focusing coils 51 and 52.

The first and second tracking coils 55 and 56 are wound around a spool 22 provided on the movable portion 20 on the first and second tracking driving magnets 43 and 44. The first and second tracking coils 51 and 52 and the first and second tilt coils 53 and 54 provide servo movement by means of current flowing in a ±Y-direction. The first and second tracking coils 55 and 56 provide servo movement by means of current flowing in a ±Z-direction. In the first and second focusing coils 51 and 52 and the first and second tilt coils 53 and 54, the upper and lower regions thereof corresponding to the upper and lower polarities of the first and second focusing/tilting driving magnets 41 and 42 are effective regions.

In order to secure an effective operation, the first and second focusing coils 51 and 52 and the first and second tilt coils 53 and 54 may be wound so that the length of the wound wire of the first and second focusing coils 51 and 52 and the first and second tilt coils 53 and 54 is longer in a Y-direction, and the first and second tracking coils 55 and 56 may be wound so that the length of wound wire of the first and second tracking coils 55 and 56 is longer in a Z-direction. As illustrated in FIG. 2, the first and second focusing coils 51 and 52 and the first and second tilt coils 53 and 54 may be wound in rectangular shapes in which the wound wire of the first and second focusing coils 51 and 52 and the first and second tilt coils 53 and 54 is longer in a Y-direction, and the first and second tracking coils 55 and 56 may be wound in a rectangular shape in which the wound wire of the first and second tracking coils 55 and 56 is longer in a Z-direction. The mutually facing first and second focusing coils 51 and 52, first and second tilt coils 53 and 54, and the first and second tracking coils 55 and 56 of the movable portion 20 are installed to increase the efficiency of the installation area.

The first and second focusing coils 51 and 52, first and second tilt coils 53 and 54, and the first and second tracking coils 55 and 56 have been described as wound coils; however, the first and second focusing coils 51 and 52, first and second tilt coils 53 and 54, and the first and second tracking coils 55 and 56 are not limited thereto. For example, the first and second focusing coils 51 and 52, first and second tilt coils 53 and 54, and the first and second tracking coils 55 and 56 may be patterns on a film in order to be a thin film-type coil. The first and second focusing coils 51 and 52 and the first and second tilt coils 53 and 54 are arranged facing the same the first and second focusing/tilting driving magnets 41 and 42. If a thin film coil is selected as the first and second focusing coils 51 and 52 and the first and second tilt coils 53 and 54, a plurality of thin film coils may be superimposed on the same location.

The suspension 31 is formed of a plurality of conductive elastically supporting members having one end coupled to a protruding portion 25 of the movable portion 20 and another end coupled to the holder 32. The suspension 31 becomes a passage to supply current to the first and second focusing coils 51 and 52, first and second tilt coils 53 and 54, and the first and second tracking coils 55 and 56. The suspension 31 is provided on the movable portion 20 such that one end of the suspension 31 is electrically connected to the first and second focusing coils 51 and 52, first and second tilt coils 53 and 54, and the first and second tracking coils 55 and 56, and the other end is electrically connected to a printed substrate (not shown) provided at the rear of the holder 31. Current is applied to the first and second focusing coils 51 and 52, the first and second tilt coils 53 and 54, and the first and second tracking coils 55 and 56 so that the suspension 31 includes at least six elastically supporting members.

The first and second focusing coils 41 and 42 driving the focus servo and the first and second tilt coils 43 and 44 driving the tilt servo are used in pairs. Conventionally separate magnets for focus servo and for tilt servo are formed integrally so that a pair of focusing/tilting driving magnets 41 and 42 is shared. A servo movement in three axes directions, the focusing, tracking, and tilting directions, is possible using the triaxial magnetic drive unit according to aspects of the invention. Moreover, the triaxial magnetic drive unit according to aspects of the present invention is unaffected by the mutual coupling of focusing and tilting operations, and is thus capable of independent tilting and of being formed in a simple and slim structure of a differentially driven optical pick-up actuator.

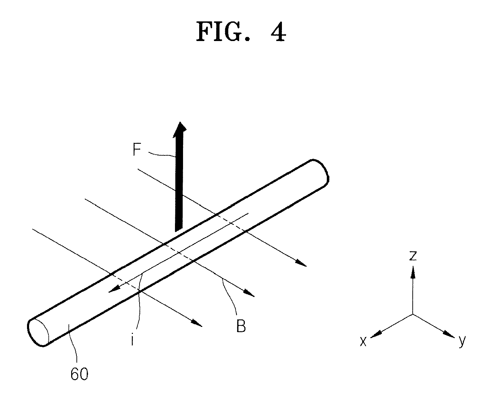

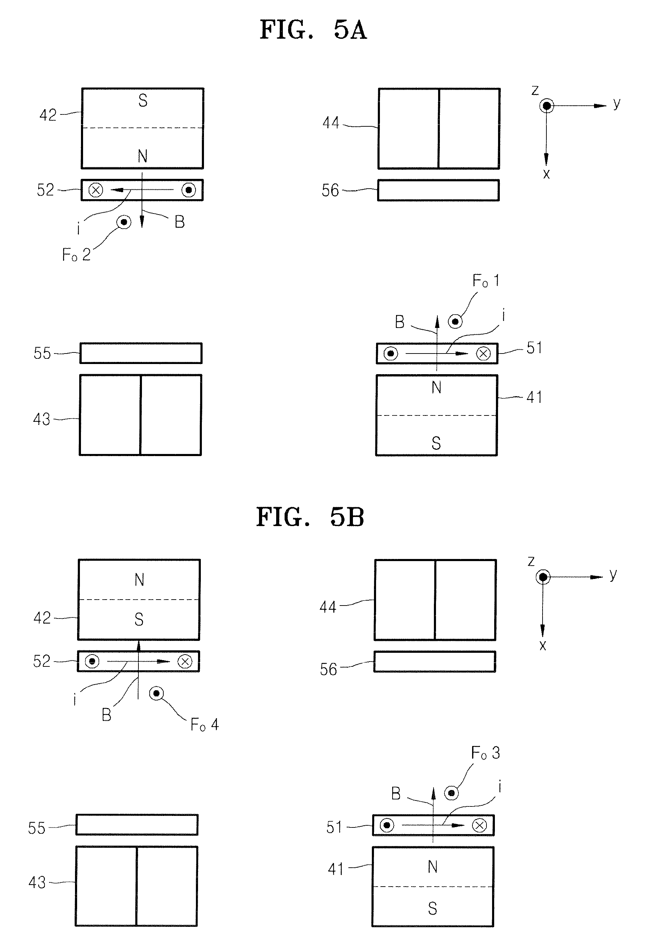

An operating routine of the optical pick-up actuator according to an example embodiment of the present invention will be described with reference to FIGS. 3 through 7B. FIG. 4 is a conceptual diagram explaining the operating principle of the triaxial magnetic driving portion of the optical pick-up actuator in FIG. 1. FIGS. 5A through 7B are plan views of the triaxial magnetic driving portion in FIG. 3.

Referring to FIG. 4, when a wire 60 in a magnetic field B lies perpendicular to the direction of the magnetic field B, a Lorentz force F occurs and applies to the object lens 10 towards the lens by increments of Bi per length unit, due to electromagnetic interaction of a current i passing through the wire 60. When the direction of the current i is in an X-direction, and the magnetic field B is in a Y-direction, the Lorentz force F is in a Z-direction. The triaxial magnetic driving portion uses this Lorentz force F to perform the servo operations.

Referring to FIGS. 3 and 5A through 7B, the servo operation of the optical pick-up actuator is a correcting movement of the position of the movable portion 20 with respect to an optical disk (not shown). The triaxial magnetic driving portion of the optical pick-up actuator can be valuable for restricting the position of the optical pick-up actuator with respect to the optical disk. The X-direction is a direction tangential to the tracks of the optical disk (not shown), the Y-direction may be a radial direction of a diameter of the optical disk, and a Z-direction may be a vertical direction perpendicular to the surface of the optical disk. The tilting of the axis of the movable portion 20 in the direction tangential to the tracks of the optical disk (that is, the X-direction) is called a tilt servo operation, and the tangential line direction is thus called a tilt direction. The radial direction (that is, the Y-direction) during the tracking servo operation of the movable portion 20 is called a tracking direction. The vertical direction (that is, the Z-direction) during the focus servo operation of the object lens 10 is called the focusing direction.

FIGS. 5A and 5B describe the focus servo operation. The poles of the first and second focusing/tilting driving magnets 41 and 42 in FIGS. 5A and 5B are those of the upper magnets 41 a and 42a. The current i flowing in the first and second focusing coils 51 and 52 is illustrated from the top. The focus servo operation is achieved through a force generated from a magnetic field B generated by the first and second focusing/tilting driving magnets 41 and 42 and a current (i) flowing in the first and second focusing coils 51 and 52 in a ±Y-direction.

FIG. 5A illustrates each of the polarizations of the first and second focusing/tilting driving magnets 41 and 42 having the same directions and facing each other diagonally. The directions of the respective currents (i) flowing through the first and second focusing coils 51 and 52 flow clockwise in coils on one side and flow counterclockwise in coils on the other side. The first and second focusing coils 51 and 52 are arranged so that when a current is applied, the current flows clockwise and counterclockwise in the first and second focusing coils 51 and 52, respectively. Similarly, when both sides of the movable portion 20 receive a force Fo1 and a force Fo2 in a Z-direction or a -Z-direction, the focus servo operation is performed.

The first focusing/tilting driving magnet 41 generates a magnetic field B in a -X-direction toward the first focusing coil 51. The current i flows in a Y-direction in the first focusing coil 51. The force Fo2 received by the second focus coil 52 is in a Z-direction. The movable portion 20 to which the first and second focusing coils 51 and 52 are attached receives a force in the Z-direction. If the direction of the current i flowing in the first and second focusing coils 51 and 52 is reversed, the force Fo1 and Fo2 acting on the movable portion 20 is in the -Z-direction.

FIG. 5B illustrates the respective polarizations of the first and second focusing/tilting driving magnets 41 and 42 facing each other diagonally with opposite polarities. The first and second focusing coils 51 and 52 are arranged so that when current is applied to the first and second focusing coils 51 and 52, the direction of the current flow is either clockwise or counterclockwise in the first and second focusing coils 51 and 52. In this case, both sides of the movable portion 20 receive forces Fo3 or Fo4 in a Z-direction or a -Z-direction, thereby performing the focus servo operation.

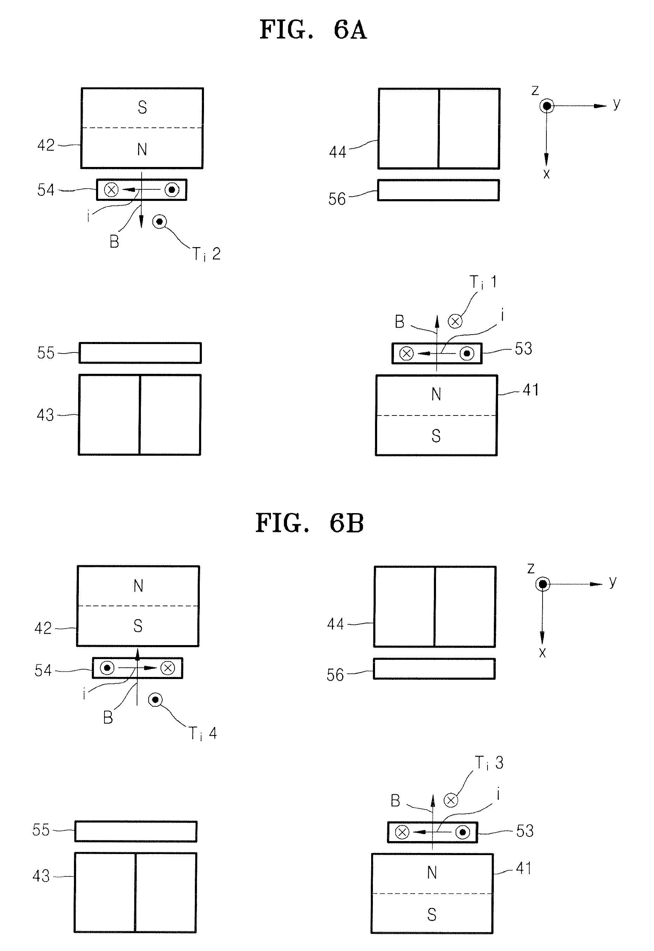

A description will be given of the servo tilting operation with reference to FIGS. 6A and 6B. The magnetizations of the first and second focusing/tilting driving magnets 41 and 42 are magnetizations of the upper magnets 41 a and 42a. The current i flowing in the first and second tilt coils 53 and 54 is in a ±Y-direction. The tilt servo operation is accomplished through the force generated by the magnetic field B emitted from the first and second focusing/tilt driving magnets 41 and 42 and the current i flowing through the first and second tilt coils 53 and 54.

FIG. 6A illustrates a case where the polarities of the first and second focusing/tilting driving magnets 41 and 42 are the same. The first and second tilt coils 53 and 54 are arranged so that applied currents i flow in the same direction. In this case, forces Ti1 and Ti2, which are in mutually opposite directions, are received by both sides of the movable portion 20, thereby enabling tilt servo operation. For example, when the first focusing/tilting driving magnet 41 emits the magnetic field B toward the first tilt coil 53 in an -X-direction and the current i flows through the first tilt coil 53 in a -Y-direction, the first tilt coil 53 receives the force Ti1 in a -Z-direction. When the second focusing/tilting driving magnet 42 emits the magnetic field B toward the second tilt coil 54 in an X-direction and the current i flows through the second tilt coil 54 in a -Y-direction, the second tilt coil 54 receives the force Ti2 in a Z-direction. When the force Ti1 applies to the first tilt coil 53 and the force Ti2 applies in the opposite direction to the second tilt coil 54, the movable portion 20 receives a twisting force.

FIG. 6B illustrates a case where the polarities of the first and second focusing/tilting driving magnets 41 and 42 that are diagonally opposite to each other are the opposite. The first and second tilt coils 53 and 54 are arranged so that applied currents to the first and second tilt coils 53 and 54 flow in opposite directions. The tilt servo operation is performed when the movable portion 20 receives forces Ti3 and Ti4 in opposite directions on either side.

When the suspension 31 is attached to either side of the movable portion 20 that is not installed with the first and second tilt coils 53 and 54, the forces Ti1 and Ti2 that are applied in opposite directions to the first and second tilt coils 53 and 54 apply a radial tilting force to the movable portion 20 in the x axis direction. The tilting of the movable portion 20 compensates for the twisting of the optical disk (not shown) during recording/reading of the optical disk, thereby preventing defects from occurring.

The twist of the optical disk is generally very small; a minimal tilting of the above movable portion 20 as compared to the servo operation is generally sufficient. The force applied to the first and second tilt coils 53 and 54 may therefore be less than the force applied to the first and second focusing coils 51 and 52. The strength of the Lorentz force may be adjusted proportionately by the vertical lengths of the wires on the magnets so that the first and second focusing coils 51 and 52 are arranged on the outside of the movable portion 20 for more exposure, and the first and second tilt coils 53 and 54 are arranged inside of the movable portion 20 for comparatively less exposure. The focusing/tilting driving magnets 41 and 42 are commonly used. The first and second focusing coils 51 and 52 and the first and second tilt coils 53 and 54 are arranged on the inside and outside of the movable portion 20 for a simpler structure that is easy to manufacture in a slim form and to perform focus and tilt servo operations without mutual coupling.

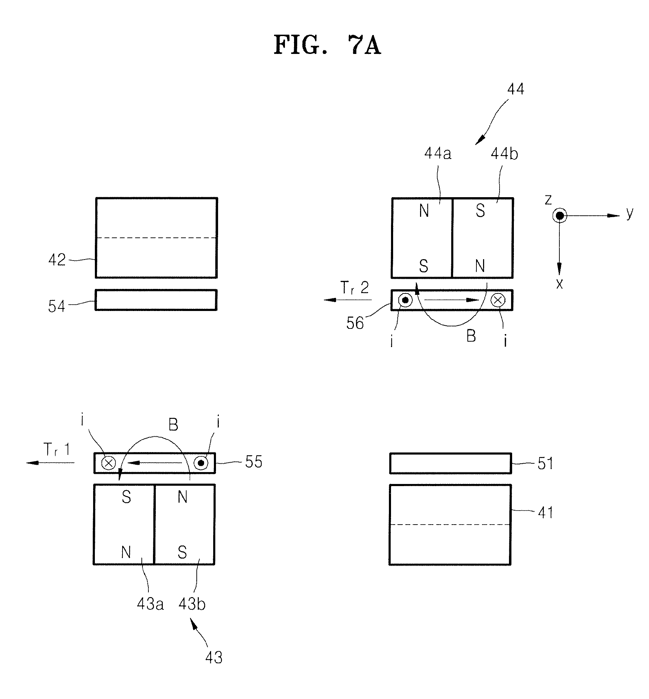

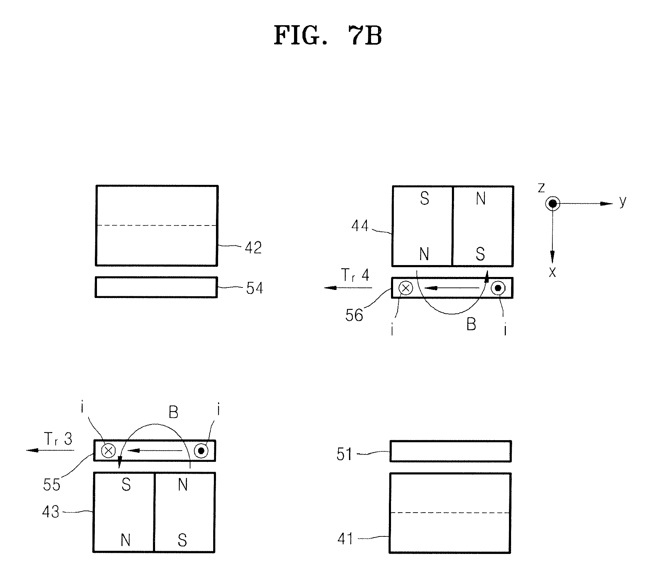

A description of the tracking servo operation will be given with reference to FIGS. 7A and 7B. The poles of the first and second tracking driving magnets 43 and 44 in FIGS. 7A and 7B are the same, polarized between the left magnets 43a and 44a and the right magnets 43b and 44 and disposed along a Z-direction. The tracking servo operation is performed through force that is generated by a magnetic field B emitted from the first and second tracking driving magnets 43 and 44 and a current that is applied to the first and second tracking coils 55 and 56 in a ±Z-direction.

FIG. 7A illustrates a case where the same respective polarities of the polarizations of the first and second tracking driving magnets 43 and 44 are diagonally opposed to one another. The directions of a current i flowing through the first and second tracking coils 55 and 56 are counterclockwise and clockwise, respectively. The tracking servo operation is performed when forces Tr1 and Tr2 in the same direction Y or -Y are received by both sides of the movable portion 20.

If the pole facing the first tracking coil 55 of the left magnet 43a of the first tracking driving magnet 43 is a South pole, the pole facing the first tracking coil 55 of the right magnet 43b is a North pole, a current i flows in a -Z-direction in the left portion of the first tracking coil 55 facing the left magnet 43a of the first tracking driving magnet 43, and a current i flows in a Z-direction in the right portion of the first tracking coil 55 facing the right magnet 43b of the first tracking driving magnet 43, then the first tracking coil 55 receives a force Tr1 in a -Y-direction. If the direction of the current (i) flowing through the first tracking coil 55 is reversed, the first tracking coil 55 receives the force Tr1 in a Y-direction.

If the pole facing the second tracking coil 56 of the left magnet 44a of the second tracking driving magnet 44 is a South pole, the pole facing the second tracking coil 56 of the right magnet 44b is a North pole, a current (i) flows in a -Z-direction in the left portion of the second tracking coil 56 facing the left magnet 44a of the second tracking driving magnet 44, and a current i flows in a Z-direction in the right portion of the second tracking coil 56 facing the right magnet 44b of the second tracking driving magnet 44, then the second tracking coil 56 receives a force Tr2 in a -Y-direction. If the direction of the current (i) flowing through the second tracking coil 56 is reversed, the second tracking coil 56 receives the force Tr2 in a Y-direction. The first and second tracking coils 55 and 56 receive forces Tr1 and Tr2 in the same direction, so that the movable portion 20 receives a force in a ±Y-direction, that is, in a tracking direction, thereby performing the tracking servo operation.

FIG. 7B illustrates a case where the respective polarities of the first and second tracking driving magnets 43 and 44 are opposite and arranged facing each other. In this case, the directions of the current (i) flowing through the first and second tracking coils 55 and 56 is either both clockwise or both counterclockwise. Forces Tr3 and Tr4 are received on both sides of the movable portion 20 simultaneously in a Y-direction or a -Y-direction, thereby performing the tracking servo operation.

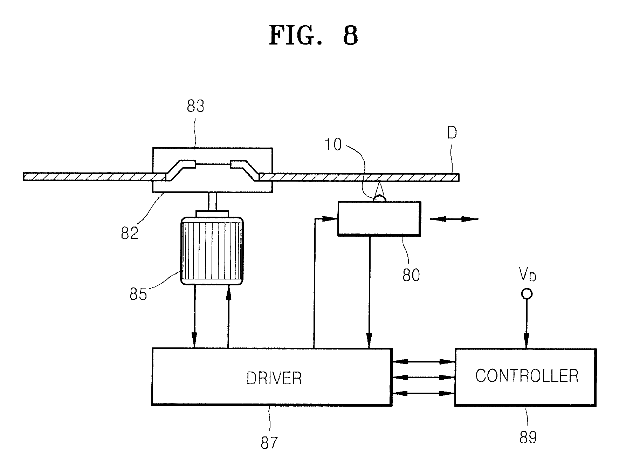

FIG. 8 is a schematic view of an optical recording/reading device employing the optical pick-up actuator, according to an example embodiment of the present invention. The optical recording/reading device includes a spindle motor 85 that spins an optical data storage medium such as an optical disk D, an optical pick-up device 80 installed to move along a radial direction of the optical disk D to read data recorded on the optical disk D or record data thereon, a driver 87 to drive the spindle motor 85 and the optical pick-up device 80, and a controller 89 to control the focus, tracking, and tilt servo operations of the optical pick-up device 80. The optical disk D is mounted on a turntable 82. A clamping device 83 is employed to clamp the optical disk D. The optical pick-up device 80 includes an optical system with the object lens 10 to focus light emitted from a light source onto the optical disk D and the optical pick-up actuator, described above, to perform servo operations in the focus, tracking, and tilt directions.

Light reflected from the optical disk D is detected by an optical detector provided in the optical pick-up actuator 80, and is photoelectrically transformed into a signal. The signal is inputted to the controller 89 through the driver 87. The driver 87 controls the rotating speed of the spindle motor 85, amplifies the inputted signal, and drives the optical pick-up actuator. The controller 89 sends commands to control servo focus, tilt, and tracking operations that have been adjusted based on the signal inputted from the driver 87 back to the driver 87 to perform the focus, tilt, and tracking servo operations. The optical recording/reading device employs the optical pick-up actuator according to aspects of the present invention to move the object lens with respect to an optical disk to record or read data on and from the optical disk.

The optical recording/reading device may also include a conventional tilt sensor (not shown) to detect tilting of a bent or warped optical disk D during the process of recording and reading data from the optical disk. The tilt sensor may be attached to the base surface of the optical pick-up device 80 or the cover (not shown) of the optical pick-up actuator. The tilt sensor measures the degree by which an optical disk D is tilted from its inherent frequency characteristics while spinning. Another tilt sensor may be provided that allows measuring of the tilt angle of the object lens 10 from the side of the movable portion using the frequency characteristics of the object lens 10. The tilt angle signals of the optical disk D and the object lens 10 measured by the tilt sensors are sent through a differential amplifier to be used as input signals applied to a pair of tilt coils of the optical pick-up actuator. When a current is applied to the tilt coils, an electromagnetic force (or moment) is generated from interaction between magnets that generate a magnetization in a direction perpendicular to the flow of current through the tilt coils and the current. The moment generated by the tilt coils is applied to reduce the amount of tilt between the optical disk D and the object lens 81.

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions and sub-combinations may be made to adapt the teachings of the present invention to a particular situation without departing from the scope thereof. For example, the optical pickup actuator may be incorporated into an optical storage medium recording/reproducing apparatus, a computer (desktop or portable), a home entertainment device, a personal entertainment device, a mobile device, or the like. Accordingly, it is intended, therefore, that the present invention not be limited to the various example embodiments disclosed, but that the present invention includes all embodiments falling within the scope of the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The inventio extends to any novel one, or any novel combination, of the features disclosed in this specification (including any accompanying claims, abstract and drawings), or to any novel one, or any novel combination, of the steps of any method or process so disclosed.

## Claims

1. An optical pick-up actuator having a movable portion (20) on which an object lens (10) is mounted; a supporting portion movably supporting the movable portion; and a triaxial magnetic driving portion installed on the movable portion and the supporting portion to move the movable portion in a focusing direction and a tracking direction and to tilt the movable portion, wherein the triaxial magnetic driving portion comprises:
first and second focusing/tilting driving magnets (41,42) installed on the supporting portion in a diagonally crossing, mutually facing disposition with respect to the object lens to move the movable portion in the focusing direction and to tilt the movable portion;
first and second tracking driving magnets (43, 44) installed on the supporting portion in a diagonally crossing, mutually facing disposition with respect to the object lens to move the movable portion in the tracking direction;
first and second focusing coils (51, 52) installed on the movable portion to move the movable portion in the focusing direction so that the first focusing coil faces the first focusing/tilting driving magnet and the second focusing coil faces the second focusing/tilting driving magnet;
first and second tilt coils (53, 54) installed on the movable portion to tilt the movable portion so that the first tilt coil faces the first focusing/tilting driving magnet and the second tilt coil faces the second focusing/tilting driving magnet, and wired independently from the first and second focusing coils; and
first and second tracking coils (55, 56) to move the movable portion in the tracking direction and installed on the movable portion so that the first tracking coil faces the first tracking driving magnet and the second tracking coil faces the second tracking driving magnet.

2. The optical pick-up actuator of claim 1, wherein the first tilt coil (53) is arranged inside the first focusing coil (51) and the second tilt coil (54) is arranged inside the second focusing coil (52) .

3. The optical pick-up actuator of claim 2, wherein:
each of the first and second tilt coils (53, 54) is wound around one of a plurality of spools (21) provided on the movable portion; and
the first focusing coil (51) is wound around the first tilt coil (53) and the second focusing coil (52) is wound around the second tilt coil (54).

4. The optical pick-up actuator of claim 2 or 3, wherein:
the first focusing coil (51) is installed on one end of the movable portion and the second focusing coil (52) is installed on another end of the movable portion so as to face the first focusing coil;
the first tilt coil (53) is installed on one end of the movable portion and the second tilt coil (54) is installed on another end of the movable portion so as to face the first tilt coil; and
the first tracking coil (55) is installed on one end of the movable portion and the second tracking coil (56) is installed on another end of the movable portion so as to face the first tracking coil.

5. The optical pick-up actuator of any preceding claim, wherein the first and second focusing/tilting driving magnets (41, 42) are polarized vertically in a focusing direction.

6. The optical pick-up actuator of claim 5, wherein the first and second focusing/tilting driving magnets (41, 42) are arranged so that respective upper polarizations of the first and second focusing/tilting driving magnet and respective lower polarizations of the first and second focusing/tilting driving magnet diagonally face each other with the same poles.

7. The optical pick-up actuator of claim 6, wherein:
the first focusing coil (51) has a current applied in a clockwise or a counterclockwise direction and the second focusing coil (52) has a current applied in a direction opposite that of the current in the first focusing coil, and
the first and second tilt coils (53, 54) have a current applied in the same clockwise or counterclockwise direction.

8. The optical pick-up actuator of any of claims 5 - 7, wherein the first and second focusing/tilting driving magnets are arranged so that respective upper polarizations of the first focusing/tilting driving magnets and respective lower polarizations of the first and second focusing/tilting driving magnet diagonally face each other with the opposite poles.

9. The optical pick-up actuator of claim 8, wherein the first and second focusing coils (51, 52) have a current that is applied in a same clockwise or counterclockwise direction, and
the first tilt coil (53) has a current applied in a clockwise or a counterclockwise direction and the second tilt coil (54) has a current applied in a direction opposite that of the current in the first tilt coil.

10. The optical pick-up actuator of any preceding claim, wherein the first and second tracking driving magnets (43, 44) are polarized laterally in a tracking direction.

11. The optical pick-up actuator of claim 10, wherein the first and second tracking driving magnets (43, 44) are arranged so that respective left polarizations and respective right polarizations of the first and second tracking driving magnets diagonally face each other with the same poles.

12. The optical pick-up actuator of claim 11, wherein the first tracking coil (55) has a current applied in a clockwise or a counterclockwise direction and the second tracking coil (56) has a current applied in a direction that is opposite to the direction of the current applied to the first tracking coil.

13. The optical pick-up actuator of any of claims 10 - 12, wherein the first and second tracking driving magnets (43, 44) are arranged so that respective left polarizations and respective right polarizations of the first and second tracking driving magnets diagonally face each other with opposite poles.

14. The optical pick-up actuator of claim 13, wherein the first and second tracking coils (55, 56) have a current applied in the same clockwise or counterclockwise direction.

15. The optical pick-up actuator of any preceding claim, wherein the one of the first and second focusing/tilting driving magnets (41, 42) and the one of the first and second tracking driving magnets (43, 44) that are disposed at a side where light is incident are separated from one another by a distance equal to or greater than a diameter of the incident light so as to allow the light to be incident on the object lens (10).

16. The optical pick-up actuator of claim 15, further comprising yokes (35, 36, 37) forming magnetic circuits together with the first and second focusing/tilting driving magnets (41, 42) and the first and second tracking driving magnets (43, 44) respectively, and the yokes include a light guide hole (35a) to allow the incident light to pass.

17. A triaxial magnetic driving apparatus to drive an optical pickup actuator in a tracking direction and a focusing direction and to tilt the optical pickup actuator, the triaxial magnetic driving apparatus comprising:
first and second focusing/tilting driving magnets (41, 42) to drive the optical pickup actuator in a focus direction and to tilt the optical pickup actuator, the first focusing/tilting driving magnet (41) coupled to one end of a supporting portion and the second focusing/titling driving magnet (42) coupled to another end of the supporting portion diagonally opposite the first focusing/tilting driving magnet so as to face the first focusing/tilting driving magnet;
first and second tracking driving magnets (43, 44) to drive the optical pickup actuator in the tracking direction, the first tracking driving magnet (43) coupled to one end of the supporting portion and the second tracking driving magnet (44) coupled to another end of the supporting portion diagonally opposite the first tracking driving magnet so as to face the first tracking driving magnet;
first and second focusing coils (51, 52) to drive the optical pickup actuator in the focusing direction in conjunction with the first and second focusing/tilting driving magnets (41, 41) and coupled to a moving portion (20) of the optical pickup actuator, the first focusing coil (51) coupled to one end of the moving portion and the second focusing coil (52) coupled to another end of the focusing portion diagonally opposite the first focusing coil so as to face the first focusing coil;
first and second tilt coils (53, 54) to tilt the optical pickup actuator in conjunction with the first and second focusing/tilting driving magnets (41, 42), the first tilt coil (53) coupled to one end of the moving portion and the second tilt coil (54) coupled to another end of the moving portion diagonally opposite the first tilt coil so as to face the first tilt coil; and
first and second tracking coils (55, 56) to move the optical pickup actuator in the tracking direction in conjunction with the first and second tracking driving magnets (43, 44), the first tracking coil (55) coupled to one end of the moving portion and the second tracking coil (56) coupled to another end of the moving portion diagonally opposite the first tracking coil so as to face the first tracking coil;
wherein the first and second tilt coils (53, 54) are wired independently from the first and second focusing coils (51, 52).

18. The triaxial magnetic driving apparatus of claim 17, wherein the first tilt coil (53) is arranged inside the first focusing coil (51) and the second tilt coil is arranged inside the second focusing coil (52).
